# EUROPEAN PATENT APPLICATION

(11) **EP 3 496 339 A1**
(43) Date of publication of application: **12.06.2019**
(21) Application number: 18210074.3
(22) Date of filing: 04.12.2018
(51) Int. Cl.: H04L 12/28

(54) **CONTROL APPARATUS, CONTROL METHOD OF CONTROL APPARATUS AND PROGRAM**

(30) Priority: 05.12.2017 JP 2017233623
(71) Applicant: Sharp Kabushiki Kaisha, Sakai-shi Osaka 590-8522 (JP)
(72) Inventor: TAKEHARA, Kazuhiro, Osaka, 590-8522 (JP)
(74) Representative: Müller Hoffmann & Partner

(57) **Abstract**

In a case in which a predetermined condition is satisfied, a home server imparts to an operation instruction a notification operation instruction causing an electronic lock or an air conditioner to execute a notification operation for notifying a user that the electronic lock or the air conditioner is to execute an operation according to the operation instruction from the home server, and transmits the operation instruction imparted with the notification operation instruction.

## Description

### BACKGROUND

### 1. Field

The present disclosure relates to a control apparatus and a control method of a control apparatus that transmit an operation instruction to a target device connected to a local area network.

### 2. Description of the Related Art

Japanese Unexamined Patent Application Publication No. 2006-255063 (September 28, 2006) discloses a washing machine that receives a remote command from outside the home. Specifically, when executing an operation indicated by a remote command from outside the home, the washing machine announces beforehand that the operation is by a remote command on a liquid crystal display or by voice guidance.

However, with the technology of the related art like the above, problems like the following occur. To announce that an operation is by a remote command from outside the home, it may be necessary to provide the target device to be controlled remotely with a mechanism for announcement, such as a liquid crystal display and a voice guide. Also, problems like the following occur even if the target device is provided with a mechanism such as a liquid crystal display and a voice guide. In the case in which the configuration for announcing an operation by a remote command from outside the home (display data or voice data for announcing the execution of the remote command) is not included in the target device, making the announcement may not be possible.

Accordingly, it is desirable to provide a control apparatus and a control method of a control apparatus capable of causing a notification to be issued about an operation indicated by an operation instruction received from an external device, even for a device not provided with a dedicated mechanism for announcing the operation.

### SUMMARY

According to an aspect of the disclosure, there is provided a control apparatus that transmits an operation instruction to a target device connected to a local area network, and in a case in which a predetermined condition is satisfied, the control apparatus imparts to the operation instruction a notification operation instruction causing the target device to execute a notification operation for notifying a user that the target device is to execute an operation according to the operation instruction transmitted from the control apparatus, and transmits the operation instruction imparted with the notification operation instruction to the target device.

According to another aspect of the disclosure, there is provided a control method of a control apparatus that transmits an operation instruction to a target device connected to a local area network. The control method includes, in a case in which a predetermined condition is satisfied, imparting to the operation instruction a notification operation instruction causing the target device to execute a notification operation for notifying a user that the target device is to execute an operation according to the operation instruction transmitted from the control apparatus, and transmitting the operation instruction imparted with the notification operation instruction to the target device.

### BRIEF DESCRIPTION OF THE DRAWINGS

Fig. 1 is a block diagram illustrating a principal configuration of a notification system and a home server for control by an external device according to Embodiment 1 of the present disclosure;
Fig. 2 is a diagram illustrating one example of a table indicating a correspondence relationship between control operations and notification operations of a target device according to Embodiment 1 of the present disclosure;
Fig. 3 is a flowchart illustrating an example of the flow of a process executed by the home server according to Embodiment 1 of the present disclosure;
Fig. 4 is a block diagram illustrating a principal configuration of a notification system and a home server for control by an external device according to Embodiment 2 of the present disclosure;
Fig. 5 is a flowchart illustrating an example of the flow of a process executed by the home server according to Embodiment 2 of the present disclosure;
Fig. 6 is a block diagram illustrating a principal configuration of a notification system and a home server for control by an external device according to Embodiment 3 of the present disclosure;
Fig. 7 is a diagram illustrating one example of a table indicating a correspondence relationship between disaster information and control operations of a target device according to Embodiment 3 of the present disclosure; and
Fig. 8 is a flowchart illustrating an example of the flow of a process executed by the home server according to Embodiment 3 of the present disclosure.

### DESCRIPTION OF THE EMBODIMENTS

### (Embodiment 1)

Hereinafter, an embodiment of the present disclosure will be described in detail.

### (Overview of home server 22)

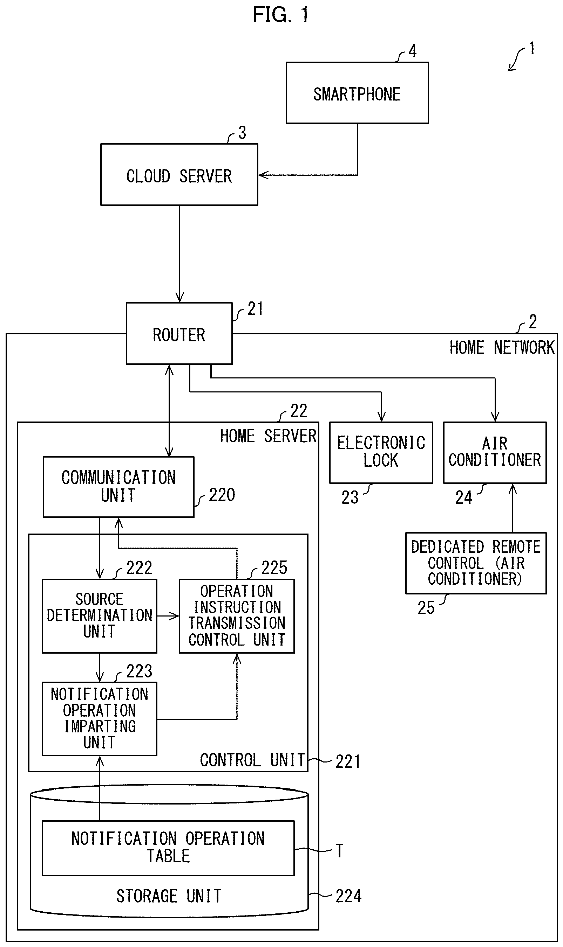

First, an overview of a home server 22 according to the present embodiment will be described with reference to Fig. 1. Fig. 1 is a block diagram illustrating a principal configuration of a notification system 1 that issues a notification of control by an external device, and the home server 22.

As illustrated in Fig. 1, the home server 22 (control apparatus) transmits an operation instruction generated by a smartphone 4 outside a home network (local area network) 2 to an electronic lock 23 (target device) and an air conditioner 24 (target device) connected to the home network 2. The home network 2 may use a network configured by a home energy management system (HEMS). Note that it is sufficient for the home network 2 to be a local area network, and the home network 2 is not particularly limited. Additionally, it is also sufficient for the target device to be a device connected to the local network, and the target device is not particularly limited.

In the case in which a predetermined condition is satisfied, the home server 22 imparts to an operation instruction a notification operation instruction causing the target device to execute a notification operation for notifying a user (a person near the target device) that an operation is to be executed by an operation instruction transmitted from the home server 22.

The home server 22 transmits the operation instruction with the imparted notification operation instruction to the target device. The above notification operation is an operation that is different from the normal running of the above target device. Namely, the notification operation is an operation of the target device intended to notifying the user that the target device will execute an operation according to an operation instruction from the outside.

At this point, the operation that is different from normal running causes a mechanism provided in the target operation to operate in a different mode than the operations during normal running, thereby making it possible to cause the target device to execute a notification operation by utilizing the mechanism already provided in the target device. For example, the notification operation executed by the air conditioner 24 may be an operation of repeatedly moving the louvers up and down rapidly in a way that does not occur during normal running or the like. Detailed examples of notification operations will be described later.

According to the above configuration, even if a target device is not provided with a dedicated announcement mechanism (for example, a display or a sound output unit), it is possible to issue a notification by an operation of the target device that an operation has been issued by an external device. For this reason, a person near the target device is able to recognize that the target device is performing an operation under control from an external device.

### (Notification system 1)

Next, the notification system 1 will be described. The notification system 1 imparts a notification operation instruction to an operation instruction generated by the smartphone 4 outside the home, and causes the controlled device to execute the notification operation.

As illustrated in Fig. 1, the notification system 1 includes the home network 2, a cloud server 3, and the smartphone 4. The smartphone 4 communicates via a network outside the home. In the present embodiment, in particular, the smartphone 4 receives a user operation, and transmits an operation instruction for an electronic device (electronic lock 23, air conditioner 24) connected to the home network 2 to the cloud server 3. The cloud server 3 transmits the received operation instruction to the home server 22 via a router 21 of the home network 2. Multiple electronic devices inside the home are connected to the home network 2. In the home server 22, a notification operation instruction is imparted to the operation instruction, and the target device executes the indicated operation and the notification operation.

### (Home network 2)

Next, the home network 2 will be described. As illustrated in Fig. 1, the home network 2 includes the router 21, the home server 22, the electronic lock 23, the air conditioner 24, and a dedicated remote control (air conditioner) 25.

### (Router 21)

The router 21 is an apparatus that connects networks, and may form the local area network inside the home while also connecting the local area network to a network outside the home (for example, the Internet). In the present embodiment, in particular, the router 21 connects to the cloud server 3 over the Internet or the like. The router 21 transmits an operation instruction received from the cloud server 3 to the home server 22.

Also, the router 21 transmits an operation instruction received from the home server 22 to the electronic lock 23 or the air conditioner 24.

### (Home server 22)

The home server 22 may use a home energy management system (HEMS) controller or the like. The home server 22 imparts a notification operation instruction to a received operation instruction for a target device, and transmits the operation instruction to the target device. The home server 22 is provided with a communication unit 220, a control unit 221, and a storage unit 224. The storage unit 224 stores a notification operation table T described later.

### (Communication unit 220)

The communication unit 220 transmits and receives communication data to and from external devices via the router 21. In the present embodiment, in particular, the communication unit 220 receives an operation instruction for a target device. The communication unit 220 transmits a received operation instruction to a source determination unit 222 of the control unit 221. Also, the communication unit 220 transmits the operation instruction to the electronic lock 23 or the air conditioner 24 via the router 21 according to an instruction from an operation instruction transmission control unit 225.

### (Control unit 221)

The control unit 221 centrally controls each component of the home server 22. The control unit 221 is provided with the source determination unit 222, a notification operation imparting unit 223, and the operation instruction transmission control unit 225.

### (Source determination unit 222)

The source determination unit 222 determines whether or not a received operation instruction for a target device is an instruction delivered through a server outside the home network 2. In other words, the source determination unit 222 determines whether or not the operation instruction satisfies a predetermined condition of being delivered through a server outside the home network 2. The source determination unit 222 may also be considered to determine whether or not the information terminal or the like that generated the operation instruction for a target device is directly connected to the home network 2.

At this point, an example of the determination performed by the source determination unit 222 will be described. The source determination unit 222 acquires the Global Internet Protocol (GIP) address of the home server 22. Also, the source determination unit 222 of the home server 22 acquires the source IP address of the device that issued the operation instruction (for example, the GIP address of the smartphone 4). In the case in which the GIP address of the smartphone 4 and the GIP address of the home server 22 are different, the source determination unit 222 determines that the smartphone 4 is not directly connected to the home network 2. Also, in the case in which the GIP address of the smartphone 4 and the GIP address of the home server 22 are the same, the source determination unit 222 determines that the smartphone 4 is directly connected to the home network 2.

The source determination unit 222 transmits the operation instruction to the notification operation imparting unit 223 or the operation instruction transmission control unit 225, according to the result of the above determination. Specifically, in the case in which the operation instruction is an operation instruction transmitted to the home server 22 from outside the home network 2, the source determination unit 222 transmits the operation instruction to the notification operation imparting unit 223. Also, in the case in which the operation instruction has not been delivered through a server outside the home network 2, the source determination unit 222 transmits the operation instruction to the operation instruction transmission control unit 225.

### (Notification operation imparting unit 223)

The notification operation imparting unit 223 imparts to the received operation instruction a notification operation instruction that indicates a notification operation for issuing a notification that an operation of the target device has been indicated by an external device. The above notification may also be considered to be a notification that an operation will be executed according to an operation instruction through the control apparatus. For example, the notification operation imparting unit 223 may reference the notification operation table T indicating a notification operation corresponding to a control operation of the target device, and impart the notification operation instruction to the operation instruction. The notification operation imparting unit 223 transmits the operation instruction with the imparted notification operation instruction to the operation instruction transmission control unit 225. Note that in the case in which a notification operation corresponding to the control operation is not set, the notification operation imparting unit 223 transmits the received operation instruction to the operation instruction transmission control unit 225 without imparting a notification operation instruction.

### (Operation instruction transmission control unit 225)

The operation instruction transmission control unit 225 transmits the operation instruction received from the source determination unit 222 or the notification operation imparting unit 223 to the target device via the communication unit 220 and the router 21.

### (Electronic lock 23, air conditioner 24)

The electronic lock 23 and the air conditioner 24 are connected to the home network 2. The electronic lock 23 and the air conditioner 24 receive an operation instruction from the home server 22 via the router 21, and execute the operation indicated by the operation instruction. Also, the electronic lock 23 and the air conditioner 24 execute operations by receiving direct operations from the user, without going through the home server 22. For example, as illustrated in Fig. 1, the air conditioner 24 executes an operation according to a user operation performed on the dedicated remote control (air conditioner) 25. Note that in the present embodiment, an example in which the electronic lock 23 and the air conditioner 24 are connected to the home network 2 is described for the sake of convenience, but any types and any number of electronic devices may be connected to the home network 2.

### (Notification operation examples)

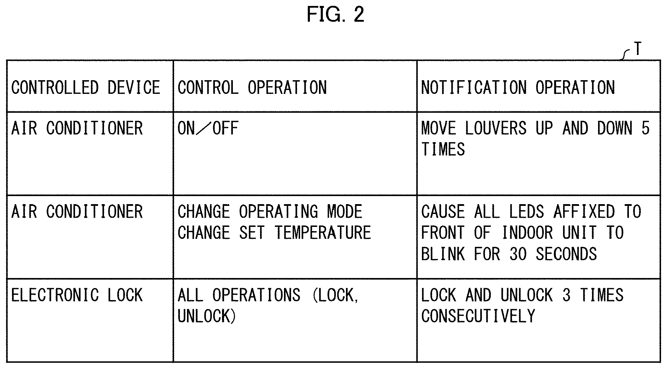

Herein, Fig. 2 will be referenced to describe examples of notification operations. Fig. 2 is a diagram illustrating one example of a notification operation table that indicates a correspondence relationship between control operations indicated by operation instructions and notification operations. As described above, in the present embodiment, the home network 2 includes the electronic lock 23 and the air conditioner 24. For this reason, the devices to be controlled by operation instructions are the air conditioner 24 and the electronic lock 23.

In the notification operation table T, an operation of repeatedly moving the louvers of the air conditioner 24 up and down five times is associated as a notification operation with a control operation of turning the air conditioner 24 on/off. For example, the notification operation may be executed before the control operation. In other words, when an operation instruction for turning on/off imparted with an instruction for a notification operation is received, the air conditioner 24 executes the operation of moving the louvers up and down five times, and then turns on/off. According to the above configuration, by causing the air conditioner 24 to execute a predetermined operation repeatedly, a person near the air conditioner 24 is able to recognize the notification operation easily.

Also, in the notification operation table T, an operation of causing all LEDs affixed to the front face of the indoor unit of the air conditioner 24 to blink for 30 seconds is associated as a notification operation with control operations of changing the operating mode and changing the set temperature in the air conditioner 24. For this reason, when an operation instruction for changing the operating mode or changing the set temperature imparted with an instruction for a notification operation is received, the air conditioner 24 causes the LEDs to blink for 30 seconds, and then changes the operating mode or changes the set temperature. According to the above configuration since the notification operation involves emitting light, a person near the air conditioner 24 is able to recognize the notification operation easily.

Also, in the notification operation table T, an operation of repeatedly locking and unlocking the lock three times consecutively is associated as a notification operation with a control operation of locking or unlocking the electronic lock 23. For this reason, when an operation instruction for locking or unlocking the lock imparted with an instruction for a notification operation is received, the electronic lock 23 repeatedly locks and unlocks the lock three times in succession, and then locks or unlocks the lock. For example, preferably an operation sound is produced by the operation of locking or unlocking the lock by the electronic lock 23. According to the above configuration, a person near the electronic lock 23 is able to recognize the notification operation easily.

### (Another example of timing when notification operation is performed)

In the examples described above, an example in which the target device executes the notification operation before executing the control operation is described. Herein, another example of the timing at which to perform the notification operation will be described. For example, the notification operation for the control operations of changing the operating mode and changing the set temperature in the air conditioner 24 may be configured as an operation that causes all LEDs affixed to the front face of the indoor unit of the air conditioner 24 to start blinking for one hour at the same time as executing the control operation.

According to the above configuration, it is possible to cause the air conditioner 24 to execute the notification operation for a long time. For this reason, a person near the air conditioner 24 is able to recognize the notification operation easily.

### (Other example 1 of electronic device that executes notification operation)

Also, in the examples described above, an example of a case in which the target devices of control operations are the electronic lock 23 and the air conditioner 24 is described. Herein, examples of notification operations will be described for the case in which a TV is connected to the home network 2.

A predetermined notification operation of one of the following operations may be associated with a control operation of powering off the TV.
- Before powering off the TV, the TV is controlled to power off, on, and off in succession for any number of repetitions.
- Before powering off the TV, the channel of the TV is changed multiple times.
- Before powering off the TV, the volume of the TV is controlled to be muted, unmuted, and muted in succession for any number of repetitions.

According to the above configuration, a person watching the TV is able to grasp that the TV has been powered off by an operation from outside the home. For example, in the case in which the smartphone 4 is provided with a function enabling a user outside the home to check the power on/off state of the TV, the configuration of the present embodiment may be applied as follows. Late at night, the user outside the home uses the smartphone 4 to check the power on/off state of the TV, and finds that the TV is powered on. The user determines that a child is up late watching TV, and uses the smartphone 4 to power off the TV. At this time, if the TV is simply switched from on to off, there is a possibility that the child watching TV may not recognized that the TV has been powered off by an operation from outside the home. For example, the child watching TV may think that he or she accidentally touched the off switch on the remote control of the TV. However, if the child watching TV recognizes a predetermined notification operation like the above, the child is able to recognize that the TV has been switched off according to an operation by the user outside the home.

### (Other example 2 of electronic device that executes notification operation)

Next, an example of a notification operation will be described for the case in which a washer/dryer is connected to the home network 2. For example, an operation of causing a display LED on the washer/dryer to blink (in a different blinking method than a blinking method indicating an error) may be associated as a notification operation with a control operation of stopping the washer/dryer.

According to the above configuration, a person near the washer/dryer is able to recognize that the washer/dryer has been stopped by an operation from outside the home. The configuration of the present embodiment may be applied as follows. A user puts clothing into the washer/dryer, sets the washer/dryer to execute the drying function, and then goes out. The user who has gone out will return home earlier than planned, decides to put the clothing being dried in the washer/dryer outside to dry, and stops the operation of the washer/dryer with the smartphone 4 from outside the home. For example, for a washer/dryer that does not execute the notification operation of issuing a notification of the execution of an operation from outside the home by the smartphone 4, a problem like the following may occur. If a person near the washer/dryer notices the state of still-wet clothing remaining inside the stopped washer/dryer, that person may feel confused. According to the configuration in this example, in the case of executing an operation from outside the home with the smartphone 4, a person near the washer/dryer is able to recognize the execution of an operation from outside the home by the blinking of the LED on the washer/dryer. For this reason, the person near the washer/dryer will not feel confused even if the person sees the state of still-wet clothing remaining inside the washer/dryer. For example, the person near the washer/dryer is able to take appropriate action such as contacting and checking with the user who has operated the washer/dryer from outside the home.

Note that a notification operation of an electronic device connected to the home network 2 is not particularly limited, and it is sufficient for the function of issuing a notification of the operation instruction from outside to be shared with an operation related to a different function provided in the electronic device.

### (Process executed by home server 22)

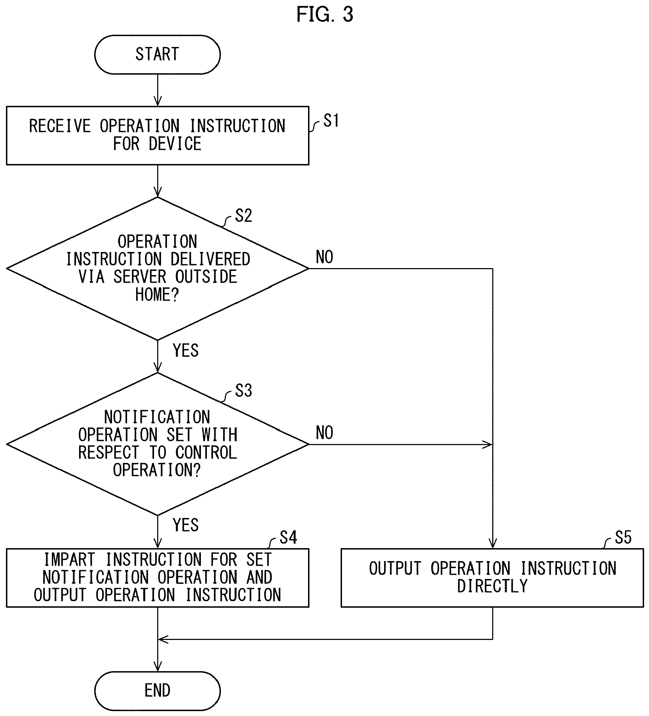

Next, a process executed by the home server 22 will be described with reference to Fig. 3. Fig. 3 is a flowchart illustrating an example of the flow of a process executed by the home server 22. When an operation instruction for a device (electronic lock 23, air conditioner 24) is received by the home server 22 (S1), the source determination unit 222 determines whether or not the received operation instruction has been delivered via the cloud server 3 (a server outside the home) (S2). In the case in which the received operation instruction has been delivered via the cloud server 3 (S2, YES), the notification operation imparting unit 223 determines whether or not a notification operation is set with respect to the control operation indicated by the operation instruction (S3). In the case in which a notification operation is set with respect to the control operation indicated by the operation instruction (S3, YES), the following process is executed. The notification operation imparting unit 223 imparts an instruction for the notification operation to the operation instruction, and the operation instruction transmission control unit 225 outputs the operation instruction to the target device (S4). After that, the process ends.

Note that in the case in which the received operation instruction has not been delivered via the cloud server 3 (S2, NO), the operation instruction transmission control unit 225 outputs the operation instruction without an imparted instruction for a notification operation (S5). After that, the process ends. Also, in the case in which a notification operation is not set with respect to the control operation indicated by the operation instruction (S3, NO), the process proceeds to S5.

Note that the present embodiment describes an example in which the home server 22 imparts the notification operation instruction to the operation instruction to transmit to the target device. On the other hand, it is also possible to configure the cloud server 3 to impart the notification operation to the operation instruction, and transmit the operation instruction with the imparted notification operation to the home server 22.

### (Embodiment 2)

Next, another embodiment of the present disclosure will be described below. Note that, for the sake of convenience, members having the same functions as members described in the above embodiment are denoted with the same signs, and description thereof will not be repeated.

### (Overview of home server 22a)

The home server 22a according to the present embodiment imparts a notification operation instruction to an operation instruction in the case of receiving an instruction to impart the notification operation instruction to the operation instruction from the user. For example, in the case in which a selection operation specifying a notification operation is received from the user on an external device that generates the operation instruction (such as a smartphone connected to the home network 2a), a notification operation instruction is imparted to the operation instruction. According to the above configuration, it is possible to cause the target device to issue a notification according to the selection by the user operating the external device.

### (Configuration of notification system 1a)

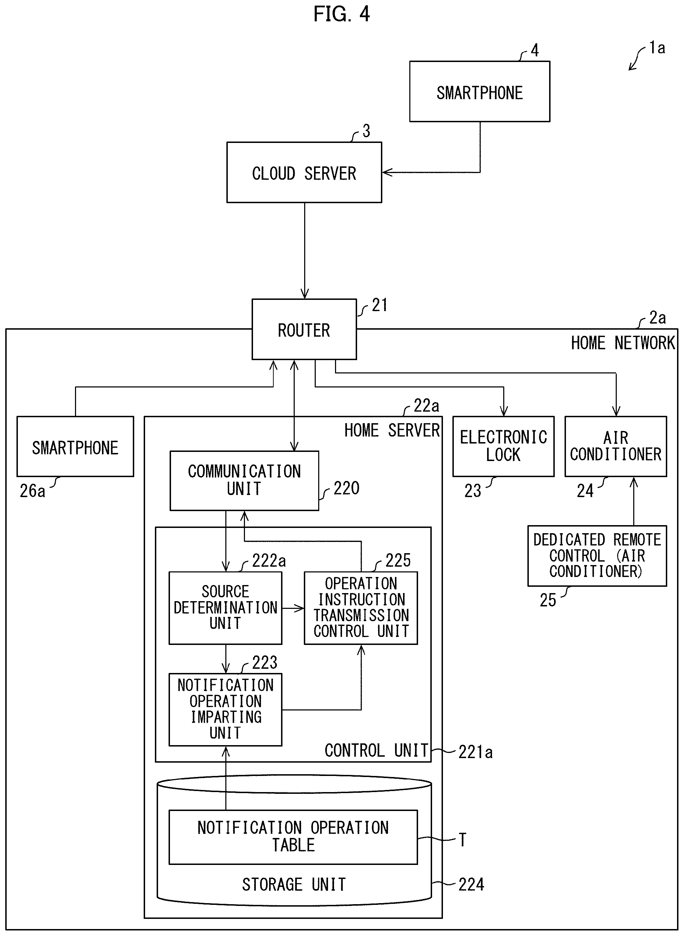

The configuration of the notification system 1a and the home network 2a according to the present embodiment will be described with reference to Fig. 4. Fig. 4 is a block diagram illustrating a principal configuration of the notification system 1a and the home server 22a. As illustrated in Fig. 4, the notification system 1a includes the home network 2a, the cloud server 3, and the smartphone 4. Since the configuration of the cloud server 3 and the smartphone 4 is similar to the configuration described in Embodiment 1, the description will not be repeated here.

### (Configuration of home network 2a)

The home network 2a includes the router 21, the home server 22a, the electronic lock 23, the air conditioner 24, the dedicated remote control (air conditioner) 25, and a smartphone 26a. Since the configuration of the electronic lock 23, the air conditioner 24, and the dedicated remote control (air conditioner) 25 is similar to the configuration described in Embodiment 1, the description will not be repeated here.

### (Smartphone 26a)

The smartphone 26a is connected to the home network 2a. The smartphone 26a receives a user operation, and generates an operation instruction for another electronic device (electronic lock 23, air conditioner 24) connected to the home network 2a. The smartphone 26a transmits the operation instruction to the home server 22a via the router 21.

Also, the smartphone 26a receives a user operation related to the selection of whether or not to include a notification operation. The smartphone 26a transmits a signal indicating whether or not to include a notification operation corresponding to the selection to the source determination unit 222a of the home server 22a via the router 21.

### (Home server 22a and control unit 221a)

The home server 22a is provided with a control unit 221a instead of the control unit 221 provided in the home server 22 described in Embodiment 1. The control unit 221a is provided with a source determination unit 222a instead of the source determination unit 222 provided in the control unit 221.

Since the rest of the configuration of each of the home server 22a and the control unit 221a is similar to the home server 22 and the control unit 221, the description will not be repeated here.

### (Source determination unit 222a)

The source determination unit 222a executes the following process in addition to the process executed by the source determination unit 222 described in Embodiment 1. In the case of receiving a signal specifying a notification operation with respect to an operation instruction received from the smartphone 26a, the source determination unit 222a transmits the operation instruction to the notification operation imparting unit 223. Also, in the case of not receiving a signal specifying a notification operation with respect to an operation instruction received from the smartphone 26a, the source determination unit 222a transmits the operation instruction to the operation instruction transmission control unit 225.

In other words, if the smartphone 4 that has generated an operation instruction receives a selection operation specifying a notification operation, a notification operation instruction is imparted to the operation instruction.

### (Process executed by home server 22a)

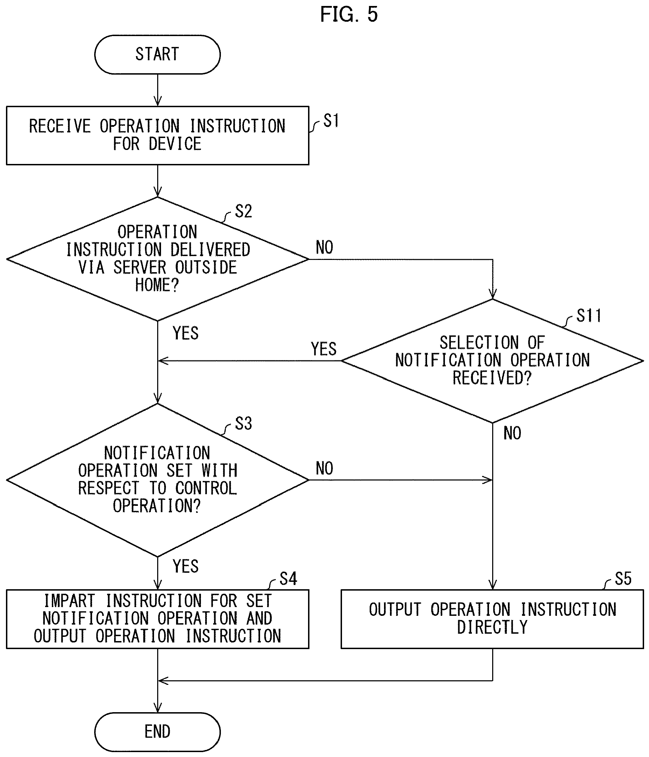

Next, Fig. 5 will be referenced to describe a process executed by the home server 22a. Fig. 5 is a flowchart illustrating an example of the flow of a process executed by the home server 22a. Note that since S1 to S5 are similar to the process described in Embodiment 1, the description will not be repeated here.

In the case in which the received operation instruction has not been delivered via the cloud server 3 (S2, NO), the source determination unit 222a references the signal received from the smartphone 26a to determine whether or not the specification of a notification operation with respect to the control operation indicated by the operation instruction has been selected (S11). In the case in which a notification operation is specified with respect to the control operation indicated by the operation instruction (S11, YES), the process proceeds to S3. In the case in which a notification operation is not specified with respect to the control operation indicated by the operation instruction (S11, NO), the process proceeds to S5.

Note that the above configuration describes an operation instruction generated by the smartphone 26a directly connected to the home network 2a, but the present embodiment may also be applied to an operation instruction generated by a device not directly connected to the home network 2a. For example, in Embodiment 1, the smartphone 4 not directly connected to the home network 2a may be configured to receive a selection of whether or not to impart a notification operation to the generated operation instruction. Additionally, a configuration is also possible in which an operation instruction is imparted to a notification operation instruction according to the selection.

### (Embodiment 3)

Next, another embodiment of the present disclosure will be described below. Note that, for the sake of convenience, members having the same functions as members described in the above embodiment are denoted with the same signs, and description thereof will not be repeated.

### (Overview of home server 22b)

In the present embodiment, in the case in which the home server 22b generates an operation instruction, a notification operation instruction is imparted to the operation instruction. Specifically, the home server 22b generates an operation instruction automatically according to information acquired from a server 6 or the like. The home server 22b imparts a notification operation instruction to the automatically generated operation instruction.

### (Configuration of notification system 1b)

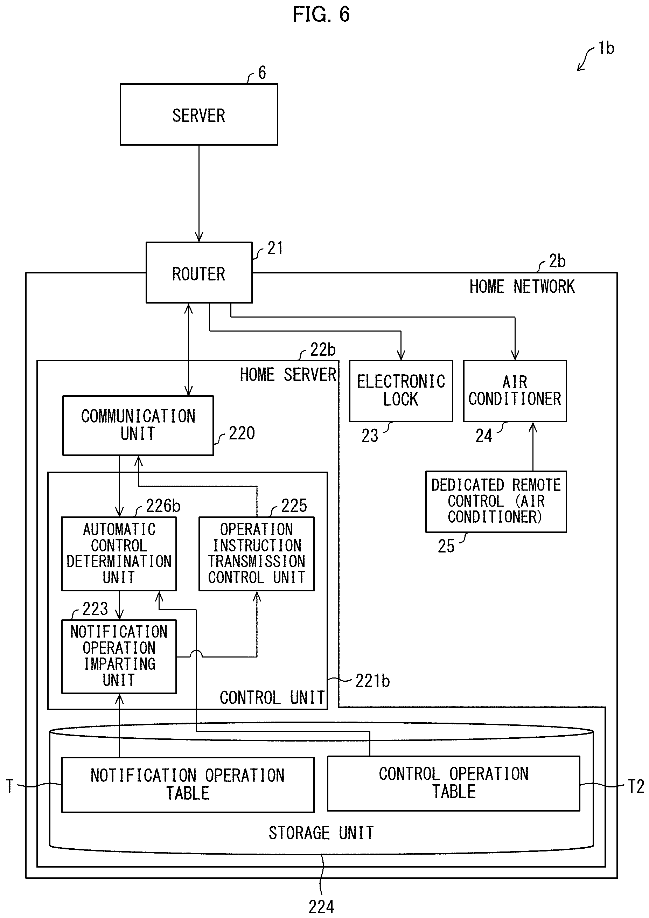

The configuration of the notification system 1b and the home network 2b according to the present embodiment will be described with reference to Fig. 6. Fig. 6 is a block diagram illustrating a principal configuration of the notification system 1b and the home server 22b. As illustrated in Fig. 6, the notification system 1b includes the home network 2b and the server 6. The server 6 provides weather information, disaster information, and the like to the home server 22b included in the home network 2b.

### (Configuration of home network 2b)

The home network 2b includes the router 21, the home server 22b, the electronic lock 23, the air conditioner 24, and the dedicated remote control (air conditioner) 25. Since the configuration of the electronic lock 23, the air conditioner 24, and the dedicated remote control (air conditioner) 25 is similar to the configuration described in Embodiment 1, the description will not be repeated here.

### (Home server 22b and control unit 221b)

The home server 22b is provided with a control unit 221b instead of the control unit 221 provided in the home server 22 described in Embodiment 1. The control unit 221b is provided with an automatic control determination unit 226b instead of the source determination unit 222 provided in the control unit 221.

Since the rest of the configuration of each of the home server 22b and the control unit 221b is similar to the home server 22 and the control unit 221, the description will not be repeated here.

### (Automatic control determination unit 226b)

The automatic control determination unit 226b receives the weather information or disaster information provided by the server 6 via the communication unit 220. The automatic control determination unit 226b references a control operation table T2 stored in the storage unit 224, and determines whether or not a control operation is associated with the received disaster information or the like. The control operation table T2 is a table that indicates control operations corresponding to disaster information. In the case in which a control operation is associated with the received disaster information or the like, the automatic control determination unit 226b generates an operation instruction for the control operation. In other words, the home server 22b references the table to determine whether or not to execute automatic control of an electronic device connected to the home network 2b. The automatic control determination unit 226b transmits the generated operation instruction to the notification operation imparting unit 223.

### (Examples of automatic control operations)

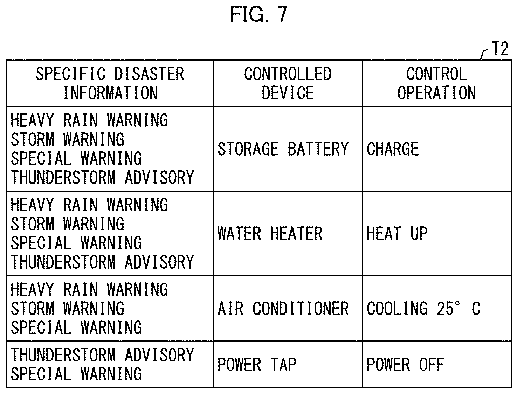

Herein, Fig. 7 will be referenced to describe examples of control operations of a target device corresponding to disaster information. Fig. 7 is a diagram illustrating one example of the control operation table T2 that indicates a correspondence relationship between disaster information and control operations of target devices. Note that, in addition to the air conditioner 24 and the electronic lock 23, electronic devices such as a storage battery, a water heater, an air conditioner, a power tap, and the like (not illustrated) are assumed to be connected to the home network 2b.

As illustrated in Fig. 7, in the control operation table T2, the storage battery, water heater, air conditioner, and power tap are included as target devices of control operations.

### (Examples of automatic control operation for storage battery)

As illustrated in Fig. 7, an operation of charging the storage battery to full charge is associated with "Heavy rain warning", "Storm warning", "Special warning", and "Thunderstorm advisory". With this arrangement, in the case in which a power outage occurs due to the influence of heavy rain, a storm, a lightning strike, or the like, preparations may be made to enable the usage of charged power in the storage battery.

### (Examples of automatic control operation for water heater)

Also, as illustrated in Fig. 7, an operation of filling the water heater with hot water (heat-up operation) is associated with "Heavy rain warning", "Storm warning", "Special warning", and "Thunderstorm advisory". With this arrangement, in the case in which a power outage or a water cutoff occurs, a state enabling adequate usage of hot water may be prepared.

### (Example of automatic control operation for air conditioner 24)

Also, as illustrated in Fig. 7, an operation that causes the air conditioner 24 to perform cooling operation at a low temperature (for example, 25 °C) is associated with "Heavy rain warning", "Storm warning", and "Special warning". With this arrangement, it is possible to air-condition an indoor space to a comfortable state in preparation for a situation in which specific disaster information is issued and the weather conditions in the user's region become worse.

### (Example of automatic control operation for power tap)

Also, as illustrated in Fig. 7, an operation that causes a power tap to power off each electronic device is associated with "Special warning" and "Thunderstorm advisory". With this arrangement, it is possible to avoid the risk of the power circuit in each electronic device suffering a dielectric breakdown or operating incorrectly due to a power surge during a lightning strike.

Also, the present embodiment illustrates a configuration in which the automatic control determination unit 226b generates an operation instruction for a target device by automatic control from the weather information and disaster information provided by the server 6. On the other hand, the automatic control determination unit 226b may also generate an operation instruction for a target device according to a detection value of a sensor (such as a temperature sensor) provided in the home in which the home network 2b is set up.

Additionally, the automatic control determination unit 226b may also generate an operation instruction with respect to multiple electronic devices connected to the home network 2b.

### (Process executed by home server 22b)

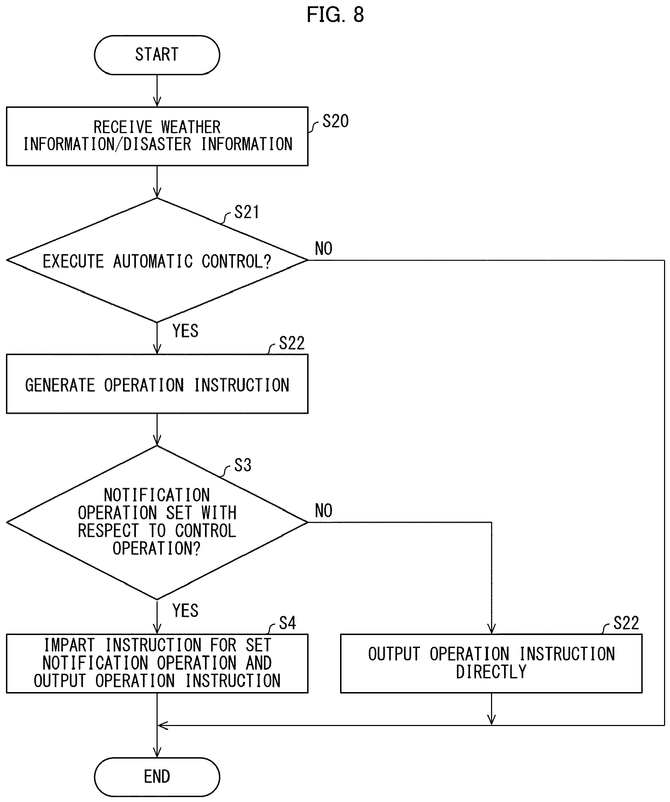

Next, Fig. 8 will be referenced to describe a process executed by the home server 22b. Fig. 8 is a flowchart illustrating an example of the flow of a process executed by the home server 22b. Note that since S3 to S5 are similar to the process described in Embodiment 1, the description will not be repeated here.

When the automatic control determination unit 226b receives weather information or disaster information (S20), the automatic control determination unit 226b determines whether or not to execute automatic control of an electronic device connected to the home network 2b (S21). In the case of executing automatic control of an electronic device connected to the home network 2b (S21, YES), the automatic control determination unit 226b generates an operation instruction for the target device. After that, the process proceeds to S3. Also, in the case of not executing automatic control of an electronic device connected to the home network 2b (S21, NO), the process ends.

Note that the present embodiment describes an example in which the home server 22b automatically generates an operation instruction and imparts a notification operation instruction to the operation instruction. On the other hand, a server outside the home, such as a cloud server, may also be configured to generate an operation instruction automatically, and transmit the operation instruction to the home server 22b. In this case, the server outside the home may also be configured to transmit an operation instruction imparted with a notification operation instruction. In addition, the home server 22b may also be configured to impart a notification operation instruction to a received operation instruction.

### (Exemplary software implementation)

The control blocks of the home server 22, the home server 22a, and the home server 22b (source determination unit 222, source determination unit 222a, notification operation imparting unit 223, and operation instruction transmission control unit 225) may be implemented by a logic circuit (hardware) formed in an integrated circuit (IC chip) or the like, and may also be implemented by software.

In the latter case, the home server 22, the home server 22a, and the home server 22b are provided with a computer that executes the commands of a program acting as software that implements each function. The computer is provided with at least one processor (control apparatus), for example, and is also provided with at least one computer-readable recording medium that stores the program. Additionally, in the computer, the effects of the present disclosure are realized by having the processor read out the program from the recording medium and execute the program. For the processor, a central processing unit (CPU) may be used, for example. For the recording medium, a "non-transitory material medium", including not only read-only memory (ROM) and the like but also a tape, a disk, a card, semiconductor memory, a programmable logic circuit, and the like may be used, for example. Also, random access memory (RAM) or the like used to load the program additionally may be provided. Also, the program may be supplied to the computer via any transmission medium (such as a communication network or a broadcast wave) capable of transmitting the program. Note that an aspect of the present disclosure may also be realized in the form of a data signal in which the program is embodied by electronic transmission, and embedded in a carrier wave.

### (Conclusion)

A control apparatus (home server 22, 22a, 22b) according to a first aspect of the present disclosure is a control apparatus that transmits an operation instruction to a target device (electronic lock 23, air conditioner 24) connected to a local area network (home network 2, 2a, 2b), and in a case in which a predetermined condition is satisfied, the control apparatus imparts to the operation instruction a notification operation instruction causing the target device to execute a notification operation for notifying a user that the target device is to execute an operation according to the operation instruction transmitted from the control apparatus, and transmits the operation instruction imparted with the notification operation instruction to the target device.

According to the above configuration, the control apparatus imparts the notification operation instruction to the operation instruction. For this reason, by having the operation instruction go through the control apparatus, a target device that has not been designed with a configuration to issue a notification that an operation instruction from an external device will be executed may be made to issue the notification.

For this reason, it is possible to make a person (user) near the target device recognize that the operation being performed by the target device is because of an operation from an external device, and is not an abnormality due to a malfunction or the like of the target device.

According to the control apparatus (home server 22, 22a) according to a second aspect of the present disclosure, in the first aspect, the notification operation may be an operation that is different from a normal running of the target device.

According to the above configuration, the notification that an operation instruction from an external device will be executed may be issued by an operation that is different from the normal running of the target device.

According to the control apparatus (home server 22, 22a) according to a third aspect of the present disclosure, in the first or second aspect, in the case in which the operation instruction is transmitted to the control apparatus from outside the local area network, the notification operation instruction may be imparted to the operation instruction.

According to the above configuration, there is a higher probability that an operation instruction delivered via a server outside the local area network is generated by a remote operation from a location distance from the location where the local area network is set up. For this reason, in the case in which a remote operation is performed with respect to the target device, the target device may be made to execute the notification operation.

According to the control apparatus (home server 22a) according to a fourth aspect of the present disclosure, in the first to third aspects, in the case of receiving an instruction to impart the notification operation instruction to the operation instruction from a user, the notification operation instruction may be imparted to the operation instruction.

According to the above configuration, the target device may be made to execute the notification according to a user operation.

According to the control apparatus (home server 22b) according to a fifth aspect of the present disclosure, in the first or second aspect, in the case in which the control apparatus generates the operation instruction, the notification operation instruction may be imparted to the operation instruction. According to the above configuration, it is possible to impart the notification operation instruction in the case in which the control apparatus generates the operation instruction.

A control method of a control apparatus according to a sixth aspect of the present disclosure is a control method of a control apparatus that transmits an operation instruction to a target device connected to a local area network, and in a case in which a predetermined condition is satisfied, imparts to the operation instruction a notification operation instruction causing the target device to execute a notification operation for notifying a user that the target device is to execute an operation according to the operation instruction transmitted from the control apparatus, and transmits the operation instruction imparted with the notification operation instruction to the target device. According to the above configuration, effects similar to the first aspect are exhibited.

The control apparatus according to each aspect of the present disclosure may also be realized by a computer. In this case, a control program of a control apparatus that causes the control apparatus to be achieved by the computer by causing the computer to operate as each unit (software element) provided in the control apparatus, as well as a computer-readable recording medium on which such a control program is recorded, are also included in the scope of the present disclosure.

The present disclosure is not limited to the embodiments described above, and various modifications are possible within the scope indicated by the claims. Embodiments obtained by appropriately combining the technical means respectively disclosed in different embodiments are also included within the technical scope of the present disclosure. Furthermore, new technical features may be formed by combining the technical means respectively disclosed in each of the embodiments.

The present disclosure contains subject matter related to that disclosed in Japanese Priority Patent Application JP 2017-233623 filed in the Japan Patent Office on December 5, 2017, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. A control apparatus that transmits an operation instruction to a target device connected to a local area network, wherein
in a case in which a predetermined condition is satisfied, the control apparatus imparts to the operation instruction a notification operation instruction causing the target device to execute a notification operation for notifying a user that the target device is to execute an operation according to the operation instruction transmitted from the control apparatus, and transmits the operation instruction imparted with the notification operation instruction to the target device.

2. The control apparatus according to Claim 1, wherein
the notification operation is an operation that is different from a normal running of the target device.

3. The control apparatus according to Claim 1 or 2, wherein
in a case in which the operation instruction is transmitted to the control apparatus from outside the local area network, the control apparatus imparts the notification operation instruction to the operation instruction.

4. The control apparatus according to any one of claims 1 to 3, wherein
in a case of receiving an instruction to impart the notification operation instruction to the operation instruction from a user, the control apparatus imparts the notification operation instruction to the operation instruction.

5. The control apparatus according to Claim 1 or 2, wherein
in a case in which the control apparatus generates the operation instruction, the control apparatus imparts the notification operation instruction to the operation instruction.

6. A control method of a control apparatus that transmits an operation instruction to a target device connected to a local area network, comprising:
in a case in which a predetermined condition is satisfied, imparting to the operation instruction a notification operation instruction causing the target device to execute a notification operation for notifying a user that the target device is to execute an operation according to the operation instruction transmitted from the control apparatus, and transmitting the operation instruction imparted with the notification operation instruction to the target device.

7. A program for causing a computer to function as a control apparatus according to claim 1.
